# EUROPÄISCHE PATENTSCHRIFT

(11) **EP 1 266 133 B1**
(45) Veröffentlichungstag und Bekanntmachung des Hinweises auf die Patenterteilung: **18.01.2006**
(21) Anmeldenummer: 01940924.2
(22) Anmeldetag: 12.03.2001
(51) Int. Cl.: F02D 11/10, B60T 7/04, G05G 1/14, G01D 5/20, G01D 3/02

(54) **PEDALEINRICHTUNG FÜR EIN KRAFTFAHRZEUG MIT EINER WEGAUFNEHMENDEN SENSOREINHEIT**
PEDAL ARRANGEMENT FOR A MOTOR VEHICLE WITH A DISPLACEMENT SENSOR UNIT
UNITE PEDALE POUR UN VEHICULE AUTOMOBILE, COMPORTANT UNE UNITE DE DETECTION DE COURSE

(30) Priorität: 13.03.2000 DE 10012179
(43) Veröffentlichungstag der Anmeldung: 18.12.2002
(73) Patentinhaber: Methode Electronics Malta Ltd., Mriehel ORM 09 (MT)
(72) Erfinder: SLANEC, Konrad, St. Julians STJ 08 (MT)
(74) Vertreter: von Puttkamer, Nikolaus
(86) Internationale Anmeldenummer: PCT/IB2001/001152
(87) Internationale Veröffentlichungsnummer: WO 2001/068404

(56) Entgegenhaltungen:
- WO-A-95/08751
- DE-C- 19 828 553
- US-A- 4 327 414

## Beschreibung

Die Erfindung bezieht sich auf eine Pedaleinrichtung für Kraftfahrzeuge mit einander benachbarten Pedalhebeln und mit Einbauplätzen für die Pedalstellungen detektierende Sensoreinheiten, die jeweils aus zumindest einem stationären Sensorkopf (3) und zumindest einem mit dem Pedalhebel (1) kinematisch verbundenen beweglichen Sensorelement (4) bestehen, das im Wirkungsbereich des zugehörigen Sensorkopfes (3) angeordnet ist.

Eine derartige Einrichtung ist z.B. in der deutschen Patentanmeldung 19958241.6 beschrieben, nach der die Sensoreinheit als induktiver Abstandsensor ausgebildet ist, dessen stationärer Sensorkopf als Spulenteil und das Sensorelement als Metallteil ausgebildet sind. Das Spulenteil und eine elektronische Umsetzeinheit für dessen Ausgangssignale sind an einem gemeinsamen Trägerteil fixiert.

Es ist ferner üblich, z.B. ein Kupplungs- und ein benachbartes Bremspedal in einem gemeinsamen Gehäuse zusammenzufassen, an dem die Pedalhebel gelagert sind.

Ferner ist durch die DE 198 28 533 A eine Vorrichtung zum Erfassen der Pedalstellungen des Kupplungs- und Bremspedals bekannt geworden, bei der in den zwei benachbarten Pedalen je ein Sensorelement in Form eines Permanentmagneten angeordnet ist. Zwischen den Pedalen ist an einem ortsfesten Halter eine Baueinheit befestigt in der zwei entgegengesetzt gerichtete Hallsensorköpfe zusammengefaßt sind, deren Wirkrichtung parallel zur Pedalachse orientiert ist. Die Sensorelemente bewegen sich somit an den Sensorköpfen quer zu deren Hauptwirkrichtung vorbei. Um Zufallsabweichungen bei den Messwerten zu vermeiden, müssen die Pedalhebel axial und radial spiel- und verschleißfrei gelagert werden. Die natürliche Empfindlichkeit eines solchen berührungslosen Sensors in allen drei Raumdimensionen erfordert auch eine Justage vor der Inbetriebnahme in der Ebene quer zur Hauptwirkrichtung.

Durch die US 4327414 A ist eine Meßeinrichtung zum digitalen Ermitteln des Drehwinkels eines Bremspedals bekannt geworden, bei der eine Winkelskala durch elektromagnetisch detektierbare radial abstehende Zähne eines mit dem Pedal verbundenen Meßsegments gebildet wird. Zwei induktiv sensible Spulen sind zur Pedalachse hin auf die quer zur Spulenachse stirnseitig vorbei schwenkenden Zähne gerichtet und detektieren deren An- bzw. Abwesenheit. Um gleichbleibende Zählimpulse zu ermöglichen, muß das Zahnsegment zur Pedalachse genau konzentrisch angeordnet sein. Die Spulenachse muß beim Einbau genau auf das Zahnsegment ausgerichtet werden. Zur Unterscheidung der Drehrichtung werden zwei Spulen benötigt.

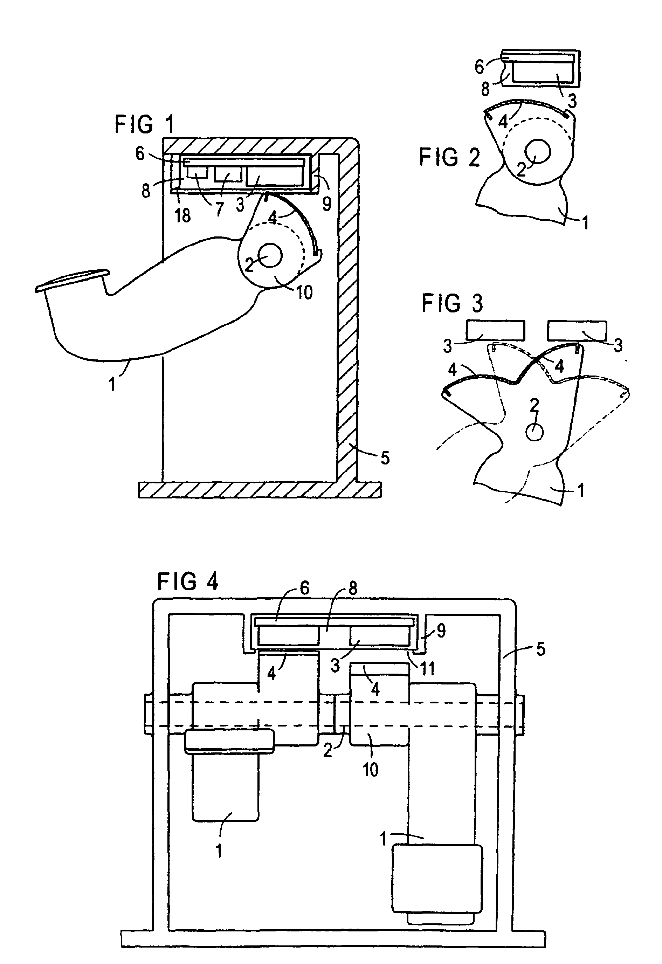

Ferner ist durch die W09508751 ein Sensoreinrichtung zu Erfassung des Drehwinkels einer Lenksäule bekannt, bei der der Abstand einer Hochfrequenzspule (Figur 2) zu einer mitdrehenden Kurvenscheibe anhand der unterschiedlichen Besonanzfrequenzen ermittelt wird, die einen erheblichen Steuerungs- und Auswerteaufwand bedingen.

Der Erfindung liegt die Aufgabe zugrunde, eine Einrichtung zu schaffen, die mit geringem Aufwand herstellbar ist und die eine genaue Winkelbestimmung im vollen Schwenkbereich ermöglicht.

Diese Aufgabe wird durch Erfindung gemäß Anspruch 1 gelöst. Bei der zur Pedalachse senkrechten Ausrichtung der Sensorköpfe kann deren Hauptwirkrichtung radial oder tangential verlaufen. Die Sensorelemente liegen stets im diesem Wirkbereich, so daß die Sensorsignale unmittelbar von ihren Abständen abhängen. Dadurch lassen sich unterschiedlichste Pedalstellungen in einem weiten Winkelbereich genau zuordnen. Da die Sensorköpfe in die gleiche Richtung weisen, ist es leicht möglich, sie auf einer gemeinsamen Leiterplatte in etwa gleicher Höhenlage anzuordnen, wobei ein seitlicher Versatz in der Leiterplattenebene vernachlässigbare Auswirkungen auf die Messwerte hat. Deshalb ist nur eine Justage in der Wirkrichtung erforderlich, die zur Signalkalibrierung in der Ruhelage des jeweiligen Pedals, individuell für jeden Sensor erfolgen kann, z.B. durch die mechanische Justage des beweglichen Sensorelementes oder vorzugsweise durch einen elektronischen Abgleich der Signalwerte.

Bei der elektronischen Justage z.B. kapazitiv, induktiv, magnetisch oder akustisch wirkenden Sensoreinheiten bedarf es keiner mechanischen Anpassung zwischen den Sensorelementen und den zugehörigen Sensorköpfen, so daß diese in einer festen Lagebeziehung zueinander in die Pedaleinrichtung eingebaut werden können, was in einem einfachen Montagevorgang ohne jegliche mechanische Abstimmung möglich ist.

Da der Fertigungs-, Montage- und Justieraufwand für die zwei Sensoreinheiten nur geringfügig höher ist als für eine, ist es möglich, die Pedaleinrichtung grundsätzlich für beide Sensoreinheiten zu konzipieren, selbst für den Fall, daß der Kunde nur eines der Pedale kontrollieren möchte. In diesem Falle wird lediglich darauf verzichtet, den Einbauplatz für den zweiten Sensorkopf zu bestücken.

Vorteilhafte Weiterbildungen der Erfindung ergeben sich aus den in den Unteransprüchen gekennzeichneten Merkmalen.

Bei einer besonders vorteilhaften Anordnung aller Funktionselemente nach Anspruch 2 bildet das gesamte Pedalgehäuse mit den Pedalen und den Sensorköpfen und optionalem Zubehör zu diesen ein vollständiges Funktionsmodul, in dem neben den mechanischen Funktionen sämtliche Sensorfunktionen zusammengefaßt sind und das somit auch als vollständige Sensoreinrichtung ausgebildet ist. Die justierarme Anordnung aller Elemente erfordert ein Minimum an Herstellungstoleranzen. Durch die einheitliche Ausrichtung der Sensorköpfe kann die Sensoreinrichtung auch Stellungen von mehreren Pedalhebeln umfassen ohne daß die komplexe Anordnung einen höheren Justieraufwand bedingt. Die Baueinheit kann je nach Kundenwunsch mit einem oder mehreren Sensorköpfen bestückt werden, ohne daß dafür besondere Anpassungsmaßnahmen erforderlich sind.

Durch die Zusammenfassung der beiden aktiven Sensorköpfe auf der Leiterplatte nach Anspruch 3 verringert sich der Herstellungs- und Montageaufwand für die Baueinheit. Die Leiterplatte bildet eine ebene Basis für die Sensorköpfe und richtet diese in ihrer Raumlage ohne besonderen Aufwand in Höhe und Wirkrichtung aus. Ein besonderer Vorteil besteht darin, daß die elektrischen Anschlüsse für die Stromversorgung bzw. die Daten über eine gemeinsame Verbinderschnittstelle und gemeinsame Kabel geführt werden können.

Die Baueinheit nach Anspruch 4 stellt eine komplette Baugruppe mit einem Minimum an Außenverbindungen dar. Besonders wichtig ist dabei, daß die Sensorköpfe und die zugehörigen elektrischen und elektronischen Elemente z.B. über eine gemeinsame Leiterplatte in einer festen Verbindung stehen, die eine genaue Abstimmung und sicherer Zuordnung ermöglicht. Ein besonderer Vorteil besteht darin, daß eine beschädigte oder aufzurüstende Baueinheit problemlos ohne mechanische Justierung durch eine neue ersetzt werden kann.

Durch die Auswerteelektronik ist es möglich, den Elektronikaufwand zu verringern. Beispielsweise können die beiden Sensorköpfe im Multiplex mit den gleichen elektronischen Elementen verbunden sein. Dabei ist es von besonderem Vorteil, daß die Elektronik mit nur einem der relativ teueren Mikrokontrollern funktionsfähig ist. Falls die angewandte Sicherheitsphilosophie eine Doppelung der Sensorik und Elektronik vorsieht, wird der Einspareffekt noch bedeutender.

Durch die Speicherplätze nach Anspruch 5 ist es möglich, die Baueinheit als vollständiges Funktionsmodul auszubilden, das standardisierte Ausgangswerte liefert, so daß der Einbau oder ein Austausch keine weitere Anpassung an die Fahrzeugelektronik erfordert.

Die Ausbildung der Sensoreinheiten als induktive z.B. nach dem Wirbelstromprinzip arbeitende Abstandssensoren nach Anspruch 6 hat den Vorteil, daß die Signalwerte von Umwelteinflüssen, z.B. von Magnetfeldern weitgehend unberührt bleiben. Bei einem Hallsensor nach dem Stand der Technik besteht die Gefahr, daß sich die magnetischen Eigenschaften insbesondere durch Anlagerung von Eisenpartikeln und deshalb seine Ausgangssignale ebenfalls verändern.

Das Gehäuse nach Anspruch 7 erleichtert die Montage der Baueinheit und die genaue Zuordnung der Sensorelemente zu den Sensorköpfen.

Durch die Freimachungen nach Anspruch 8 ist es möglich, die Sensorelemente nahe an die Sensorköpfe heranzuführen und damit die Sensibilität der Sensoreinheit zu verstärken.

Die Steckaufnahme nach Anspruch 9 erleichtert den Einbau und den Austausch der Baueinheit, wobei die Verrastung nach Anspruch 10 eine einfache und sichere Halterung ermöglicht und wobei die Steckanschlüsse nach Anspruch 11 eine entsprechend einfache und sichere Außenverbindung herstellen.

Durch die Weiterbildung nach Anspruch 12 ist es möglich eine besonders gut auswertbare, annähernd lineare Intensitätskurve im detektierten Schwenkbereich der Pedale zu erzeugen, was die Justierung des Systems erleichtert.

Die Anordnung nach Anspruch 13 ermöglicht es die beiden Sensorköpfe mit entsprechend engem Seitenabstand anzuordnen und die Baueinheit kompakt auszubilden.

Der Doppelkopf nach Anspruch 14 erhöht die Redundanz des Sensorsystems, indem auch bei einer Störung an eine Sensorkopf die Funktionsfähigkeit erhalten bleibt. Durch den ständigen Vergleich der Messwerte beider Sensorköpfe lassen sich Störungen in einem Sensor schnell erkennen. Die Gegenläufigkeit der beiden Sensorelemente bedeutet, daß sich diese wechselweise dem den Sensorköpfen nähern bzw. von diesen entfernen. Dies ergibt eine besonders deutliche, gut auszuwertende Änderung eines Summen- oder Differenzsignals. Die Zusammenfassung der Sensorköpfe in der einen Baueinheit ergibt besonders großen Einspareffekt.

Die Baueinheit nach Anspruch 15 stellt ein peripheres elektronisches Subzentrum dar, in dem die Kapazität der elektronischen Bauteile und insbesondere des Mikrokontrollers auch dazu ausgenutzt werden kann, um die Signale aus der näheren Umgebung der Pedaleinrichtung wie z.B. von der Lenksäule oder vom Armaturenbrett zu verarbeiten und dem gemeinsamen Datenbus zuzuführen. Dabei ist es auch von Vorteil, daß die Baueinheit an einer gut zugänglichen Stelle angeordnet und daher leicht auswechselbar ist.

Ein Ausführungsbeispiel der Erfindung ist in der Zeichnung dargestellt und wird im folgenden näher erläutert. Es zeigen:
- Figur 1: schematisiert einen Schnitt durch eine Pedaleinrichtung eines Automobils,
- Figur 2: einen anderen Teilschnitt durch die Pedaleinrichtung nach Figur 1,
- Figur 3: einen Teilschnitt durch eine abgewandelte Pedaleinrichtung,
- Figur 4: eine Seitenansicht der Pedaleinrichtung nach den Figuren 1 und 2,
- Figur 5: eine perspektivische Ansicht einer anderen Pedaleinrichtung,
- Figur 6: ein Funktionsschema eines Teils der Pedaleinrichtung nach Figur 4.

Nach Figur 1 ist ein Pedalhebel 1 einer Pedaleinrichtung um eine Pedalachse 2 schwenkbar in einem als Pedalbock ausgebildeten Gehäuse 5 gelagert, der z.B. in den Pedalraum eines Automobils eingebaut werden kann. Am z.B. aus glasfaserverstärktem Kunststoff bestehenden Pedalhebel 1 ist ein aus ferromagnetischem Material bestehendes Sensorelement 4 angesetzt. Oberhalb des Pedalhebels 1 befindet sich ein stationär angebrachter Sensorkopf 3 in Form eine Spulenteils, das ein zum Sensorelement 4 hin gerichtetes, quer zur Pedalachse orientiertes elektromagnetisches Wechselfeld induziert und das zusammen mit dem Sensorelement 4 eine induktive Sensoreinheit bildet. Der Stirnabstand des Sensorelementes 4 zum Sensorkopf 3 ändert sich in Abhängigkeit von der Schwenkstellung des Pedalhebels 1. Dies bewirkt eine Änderung der elektromagnetischen Kopplung zwischen dem Sensorkopf 3 und dem Sensorelement 4, die sich in messbaren elektrischen Signalen wiederspiegelt. Das Sensorelement 4 weist eine konvexe nockenartige Krümmung auf, deren Verlauf so gestaltet ist, daß sich die Ausgangssignale des Sensorkopfes annähernd proportional zu Winkelstellung des Pedalhebels 1 verändern.

Das Sensorelement 4 weist eine einfach zu erzeugende Biegekontur auf und kann mit geringem Aufwand durch Einlegen in eine Gießform für den Pedalhebel 1 mit diesem verbunden werden. Dieses Teil der Sensoreinheit verursacht daher beim weiteren Einbau in das Gehäuse keinerlei zusätzliche Kosten. Der Sensorkopf 3 kann unabhängig von der Montage des Pedalhebels 1 ohne wechselseitige Behinderung in den Pedalraum eingebaut werden. In der gezeigten Ausgangsstellung ist ein Ende des Sensorelements dem Sensorkopf eng benachbart. Die elektromagnetische Kopplung ist hier entsprechend stark.

Der Sensorkopf 3 ist auf einer Leiterplatte 6 angebracht, die noch weitere elektrische und elektronische Bauelemente 7 trägt. Diese Teile sind in einer Baueinheit 8 integriert, die als geschlossener Steckeinschub ausgebildet ist, der in eine entsprechende gut zugängliche Steckaufnahme 9 des Gehäuses 5 einschoben und darin durch Rastmittel 18 in einer festen Lagebeziehung fixiert ist. Die mit einem Kunststoffgehäuse versehene Baueinheit 8 ist mit einem nicht näher dargestellten Steckverbinder versehen, über den sie mit elektrischen Anschlussleitungen des Automobils zur Stromversorgung und Datenübermittlung verbunden werden kann. Die Baueinheit 8 ist mit einem geschlossenen Kunststoffgehäuse versehen, das das elektromagnetische Feld zwischen dem Sensorkopf und dem Sensorelement nicht beeinträchtigt.

Nach Figur 2 ist der Pedalhebel 1 in eine Funktionsstellung geschwenkt, in der der Abstand zum Sensorkopf 3 erheblich vergrößert ist. Die elektromagnetische Kopplung und damit das Signal haben sich entsprechend geändert. Durch einen Teil der elektronischen Bauelemente können die Sensorsignale in korrigierte Ausgangssignale umgewandelt werden und in einer anderen elektronischen Einrichtung des Automobils verarbeitet werden.

Nach Figur 3 weist die Sensoreinheit zwei einander benachbarte Sensorköpfe 3 auf, denen am Pedalhebel 1 zwei Sensorelemente von entgegengesetzter Neigung kipphebelartig gegenüberstehen. Die beiden Sensorelemente sind hier an den einander zugewandten Endabschnitten im gemeinsamen Mittelbereich einstückig miteinander zu einem schmetterlingsartigen Bauteil verbunden, was den Herstellungsaufwand verringert. Die Sensorelemente sind gegenüber der Pedalachse 2 exzentrisch so geformt, daß sie sich wechselweise dem jeweiligen Spulenteil 3 nähern bzw. von diesem entfernen. Dies bewirkt eine besonders starke Änderung des Differenzsignals zwischen den beiden Sensorköpfen 3.

In der strichpunktiert angedeuteten Ausgangsstellung ist eines der Metallteile 4 einem der Sensorköpfe 3 eng angenähert, während das andere Sensorelement 4 sich in der am weitesten vom Spulenteil 3 entfernten Stellung befindet. In der volllinig dargestellten Endstellung des Fußhebels 1 haben sich die Abstände der Sensorelemente von ihren Sensorköpfen 3 umgekehrt.

Figur 4 zeigt die Pedaleinrichtung nach den Figuren 1 und 2 mit zwei der unabhängig voneinander betätigbaren Pedalhebel 1 z.B. zum Bremsen bzw. Kuppeln. Die beiden Pedalhebel 1 sind in zwei unterschiedlichen, den Figuren 1 bzw. 2 entsprechenden Funktionsstellungen dargestellt. Sie sind auf der gemeinsamen durchgehenden Pedalachse 2 gelagert, die in Seitenwänden des Gehäuses 5 verankert ist. Die Pedalhebel 1 sind im Bereich der Pedalachse 2 auf den einander zugewandten Seiten mit seitlichen nockenartigen Ansätzen 10 versehen, auf denen die Sensorelemente 4 angebracht sind. Die Ansätze 10 verbreitern die Lagerung der Pedalhebel 1 auf der Pedalachse 2. Oberhalb der Ansätze 10 befinden sich auf einer Seite der Leiterplatte 6 die hinsichtlich ihrer Hauptwirkrichtung parallel ausgerichteten zylindrischen Sensorköpfe 3, deren geringer Mittenabstand annähernd gleich dem Mittenabstand zwischen den Ansätzen 10 ist, wobei sich die Verbindungslinie zwischen den Sensormittelpunkten parallel zur Pedalachse 6 erstreckt. Die Leiterplatte 6 erstreckt sich ebenfalls parallel zur Pedalachse 2, so daß sich für beide Sensoreinheiten zwischen den Sensorköpfen 3 und ihren Sensorelementen 4 gleiche elektromagnetische Koppelbedingungen ergeben, die unempfindlich gegen seitliches Spiel der Pedalhebel 1 sind.

Die Steckaufnahme 9 ist durch seitliche Führungsstege gebildet, die die Baueinheit 8 nur wenig übergreifen und den Bewegungsbereich der Sensorelemente 4 freilassen, so daß diese ungehindert in die so gebildete Freimachung 11 bis in die unmittelbare Nähe der Sensorköpfe 3 eingeschwenkt werden können.

Das Gehäuse 5, die Pedalachse 2, die Pedalhebel 1 und die Baueinheit 8 bilden ein vollständiges Pedalwerk, das komplett vorgefertigt und getestet in den Pedalraum des Automobils eingebaut werden kann.

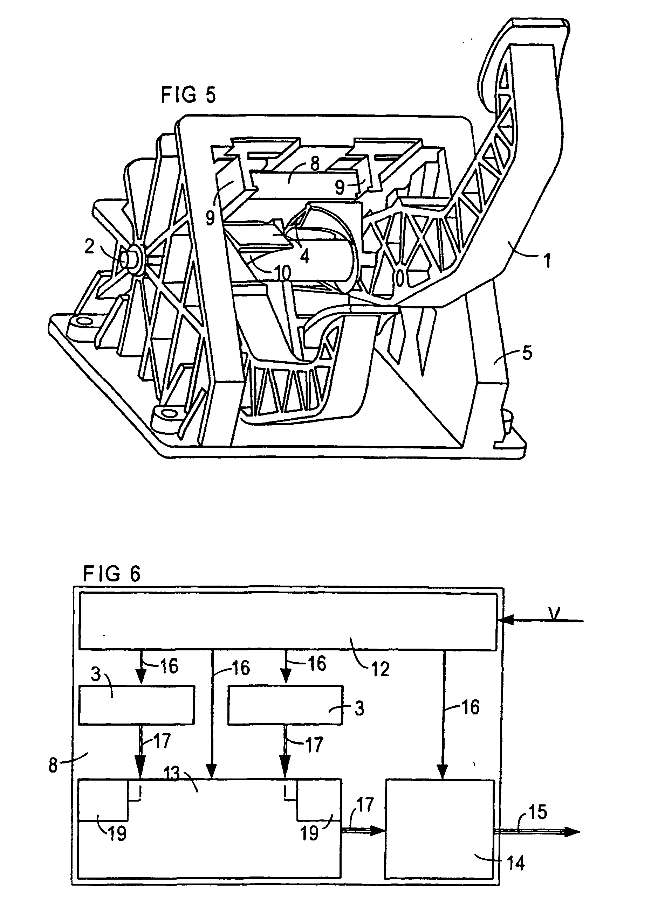

In Figur 5 ist ein derartiges Pedalwerk in realistischer Darstellung wiedergegeben. Das Gehäuse 4 ist als spritzgegossener, mit Rippen verstärkter gehäuseartiger Kunststoffkörper ausgebildet ebenso wie die glasfaserverstärkten Pedalhebel 1. Die Baueinheit 8 ist von der offenen Bedienseite her in die Steckaufnahme 9 montagegünstig eingeschoben. Da die Baueinheit in einem Bereich des Automobils angeordnet ist, der von einer Vielzahl von anderen Signalleitungen durchquert wird, ist es von Vorteil solche Leitungen mit der Baueinheit 8 zu verbinden und deren Funktionselemente auch zur Verarbeitung von solchen externen Signalen zu nutzen und, falls erforderlich, mit zusätzlichen Funktionselementen zu versehen, ohne daß der Bau- und Montageaufwand erheblich gesteigert werden muss.

Figur 6 zeigt ein Funktionsschema der Baueinheit 8 nach den Figuren 1 und 4. Die Bauelemente 7 (Fig. 1) der Baueinheit 8 bilden Funktionseinheiten in Form einer Stromversorgung 12, einer Auswerteelektronik 13 und einer Schnittstelle 14. Die vom Bordnetz mit einer Standardspannung V belieferte Stromversorgung 12 ist über Stromversorgungsleitungen 16 mit den übrigen Funktionsteilen (3, 13, 14) verbunden, die untereinander durch Datenleitungen 17 verbunden sind. Die beiden Sensorköpfe 3 geben ihre Ausgangssignale auf die gemeinsame Auswerteelektronik 13, die eine Signalkorrektur vornimmt und die über die Schnittstelle 14 mit einem nach außen führenden Signalausgang 15 verbunden ist. Die Auswerteelektronik 13 weist Speicherplätze 19 auf, in denen für die beiden Sensorköpfe charakteristische Korrekturwerte abgespeichert sind, die in einem z.B. initialen Justiervorgang gewonnen wurden.

## Patentansprüche

1. Pedaleinrichtung für Kraftfahrzeuge mit einander benachbarten Pedalhebeln und mit Einbauplätzen für die Pedalstellungen detektierende Sensoreinheiten, die jeweils aus zumindest einem stationären Sensorkopf (3) und zumindest einem mit dem Pedalhebel (1) kinematisch verbundenen beweglichen Sensorelement (4) bestehen, das im Wirkungsbereich des zugehörigen Sensorkopfes (3) angeordnet ist,
**dadurch gekennzeichnet, daß** die Hauptwirkrichtung der Sensorköpfe annähernd senkrecht zur Pedalachse (2) und parallel zueinander orientiert sind und daß die Sensorelemente ihrem Pedalhebel jeweils derart zugeordnet sind, daß sie zur Stirnebene der Sensorköpfe abstandsverändernd in deren Wirkrichtung bewegbar sind.

2. Pedaleinrichtung nach Anspruch 1,
**dadurch gekennzeichnet, daß** sämtliche Sensorköpfe in einer gemeinsamen Baueinheit (8) zusammenfassbar sind,
**daß** die Pedaleinrichtung ein gemeinsames Gehäuse (5) für beide Pedalhebel (1) aufweist und
**daß** die Baueinheit (8) unmittelbar im Gehäuse (5) verankerbar ist.

3. Pedaleinrichtung nach Anspruch 2,
**dadurch gekennzeichnet, daß** die Sensorköpfe (3) auf einer Flachseite einer gemeinsamen Leiterplatte (6) der Baueinheit (8) angebracht sind.

4. Pedaleinrichtung nach Anspruch 3,
**dadurch gekennzeichnet, daß** die Leiterplatte (6) weitere elektrische und elektronische Bauelemente zur Stromversorgung sowie zur Steuerung der Sensorköpfe und zur Auswertung der von diesen erzeugten Detektorsignale trägt und
daß die Leiterplatte (6) mit den Bauelementen und einem optionalen Kunststoffgehäuse die autonome Baueinheit (8) mit einer für beide Sensorköpfe (3) gemeinsamen Stromversorgung und einer gemeinsamen Auswerteeinrichtung bildet.

5. Pedaleinrichtung nach Anspruch 4,
**dadurch gekennzeichnet, daß** die Auswerteelektronik (13) mit den einzelnen Sensorköpfen (3) zugeordneten Speicherplätzen (19) für aus Justiervorgängen gewonnene Korrekturwerte für die einzelnen Sensorköpfe (3) versehen ist.

6. Pedaleinrichtung nach einem der vorhergehenden Ansprüche, **dadurch gekennzeichnet, daß** die Sensoreinheiten als induktive Abstandssensoren mit jeweils zumindest einem als Sensorkopf (3) dienenden Spulenteil und zumindest einem das Sensorelement bildenden Metallteil ausgebildet sind.

7. Pedaleinrichtung nach einem der vorhergehenden Ansprüche, **dadurch gekennzeichnet,**
**daß** das Gehäuse (5) einen festen Einbauplatz für die Baueinheit (8) aufweist.

8. Pedaleinrichtung nach Anspruch 7,
**dadurch gekennzeichnet, daß** das Gehäuse (5) im Bereich der Sensorköpfe (3) Freimachungen (11) für die Sensorelemente (4) aufweist.

9. Pedaleinrichtung nach Anspruch 7 oder 8,
**dadurch gekennzeichnet, daß** das Gehäuse (5) eine Steckaufnahme (9) für die Baueinheit (8) aufweist.

10. Pedaleinrichtung nach Anspruch 9, **dadurch gekennzeichnet, daß** die Baueinheit (8) in der Steckaufnahme (9) verrastbar ist.

11. Pedaleinrichtung nach einem der vorhergehenden Ansprüche, **dadurch gekennzeichnet, daß** die Baueinheit (8) mit Steckanschlüssen für die externen elektrischen Verbindungen versehen ist.

12. Pedaleinrichtung nach Anspruch 1,
**dadurch gekennzeichnet, daß** die Sensorelemente in der Nähe der Pedalachse (2) angeordnet und mit einer um die Pedalachse (2) spiralartigen Krümmung versehen sind.

13. Pedaleinrichtung nach einem der vorhergehenden Ansprüche, **dadurch gekennzeichnet, daß** die Sensorelemente (4) auf den einander zugewandten Seiten der Pedalhebel (1) angeordnet sind.

14. Pedaleinrichtung nach einem der vorhergehenden Ansprüche, **dadurch gekennzeichnet, daß** zumindest einer der Sensorköpfe (3) zwei der Spulenteile aufweist, denen zwei der gegenläufig wirkende Sensorelemente (4) zugeordnet sind,
**daß** die stationären Sensorköpfe (3) einander benachbart angeordnet sind,
**daß** die beiden entgegengesetzt geneigten Sensorelemente(4) schmetterlingsartig zwischen der Pedalachse (2) und den Spulenteilen (3) angeordnet sind.
und daß sämtliche Sensorköpfe (3) in der Baueinheit (8) integriert sind.

15. Pedaleinrichtung nach einem der vorhergehenden Ansprüche, **dadurch gekennzeichnet, daß** Baueinheit Anschlüsse für externe elektrische Signalleitungen aus der Umgebung der Pedaleinrichtung aufweist
**daß** die auf diesen Leitungen geführten externen Signale in der Auswerteelektronik der Baueinheit aufbereitet werden können und
**daß** die aufbreiteten externen und internen Signale auf einen gemeinsamen Datenbus ausgegeben werden können.

## Claims

1. A pedal arrangement for motor vehicles having mutually adjacent pedals and having space for installing sensor units detecting the pedal positions, which in each case consist of at least one stationary sensor head (3) and at least one movable sensor element (4) kinematically connected to the pedal (1), which is disposed in the sphere of action of the associated sensor head (3),
**characterised in that** the main direction of action of the sensor heads is orientated approximately perpendicularly to the pedal shaft (2) and parallel to one another
and **in that** the sensor elements are associated to their pedal in each case in such a manner that they are moveable and change their spacing in relation to the end plane of the sensor heads in their direction of action.

2. A pedal arrangement according to Claim 1,
**characterised in that** all sensor heads can be combined in a common structural unit (8),
**in that** the pedal arrangement comprises a common housing (5) for both pedals (1)
and **in that** the structural unit (8) can be anchored directly in the housing (5).

3. A pedal arrangement according to Claim 2,
**characterised in that** the sensor heads (3) are mounted on a flat side of a common printed circuit board (6) of the structural unit (8).

4. A pedal arrangement according to Claim 3,
**characterised in that** the printed circuit board (6) supports other electrical and electronic components for supplying electricity and also for controlling the sensor heads and for evaluating the detector signals generated thereby,
and **in that** the printed circuit board (6) with the components and an optional plastic housing forms the autonomous structural unit (8) having a common electricity supply for both sensor heads (3) and a common evaluation device.

5. A pedal arrangement according to Claim 4,
**characterised in that** the evaluation electronics (13) are provided with memory locations (19) associated with the individual sensor heads (3) for correction values, obtained from adjustment operations, for the individual sensor heads (3).

6. A pedal arrangement according to one of the preceding Claims,
**characterised in that** the sensor units are constructed as inductive distance sensors each having at least one coil part serving as a sensor head (3) and at least one metal part forming the sensor element.

7. A pedal arrangement according to one of the preceding Claims,
**characterised in that** the housing (5) comprises a fixed installation space for the structural unit (8).

8. A pedal arrangement according to Claim 7,
**characterised in that** the housing (5) comprises clearances (11) for the sensor elements (4) in the vicinity of the sensor heads (3).

9. A pedal arrangement according to Claim 7 or 8,
**characterised in that** the housing (5) comprises a socket (9) for the structural unit (8).

10. A pedal arrangement according to Claim 9,
**characterised in that** the structural unit (8) can be locked in the socket (9).

11. A pedal arrangement according to one of the preceding Claims,
**characterised in that** the structural unit (8) is provided with plug-in connections for the external electrical connections.

12. A pedal arrangement according to Claim 1,
**characterised in that** the sensor elements are disposed in the vicinity of the pedal shaft (2) and are provided with a curvature in the manner of a spiral around the pedal shaft (2).

13. A pedal arrangement according to one of the preceding Claims,
**characterised in that** the sensor elements (4) are disposed on the mutually facing sides of the pedal (1).

14. A pedal arrangement according to one of the preceding Claims,
**characterised in that** at least one of the sensor heads (3) comprises two of the coil parts to which two of the sensor elements (4) acting in opposite directions are assigned,
**in that** the stationary sensor heads (3) are disposed adjacent to one other,
**in that** the two oppositely inclined sensor elements (4) are disposed butterfly-like between the pedal shaft (2) and the coil parts (3),
and **in that** all sensor heads (3) are integrated in the structural unit.

15. A pedal arrangement according to one of the preceding Claims,
**characterised in that** the structural unit comprises connections for external signal lines from the vicinity of the pedal arrangement,
**in that** the external signals conveyed on these lines can be conditioned in the evaluation electronics of the structural unit
and **in that** the conditioned external and internal signals can be outputted on a common data bus.

## Revendications

1. Système de pédales pour des véhicules automobiles comprenant des leviers de pédale proches les uns des autres et des places de montage pour des unités de capteur qui détectent les positions des pédales et qui comprennent chacune au moins une tête de capteur (3) et au moins un élément de capteur (4) mobile relié cinématiquement au levier de pédale (1), cet élément étant disposé dans la zone d'action de la tête de capteur (3) correspondante, **caractérisé en ce que** les éléments de capteur ont leurs directions d'action principale parallèles entre elles et sensiblement perpendiculaires à l'axe de pédale (2), ces éléments de capteur étant associés chacun à leur levier de pédale de manière que, quand ils se déplacent dans leurs directions d'action, leurs distances par rapport à la face frontale des têtes de capteur varient.

2. Système de pédales selon la revendication 1, **caractérisé en ce que** toutes les têtes de ses capteurs peuvent être réunies dans une unité constructive commune (8), et qu'il présente pour les deux leviers de pédale (1) un boîtier (5) qui est commun et dans lequel peut être ancrée directement l'unité constructive (8).

3. Système de pédales selon la revendication 2, **caractérisé en ce que** les têtes de capteur (3) sont montées sur une face plate d'un circuit imprimé (6) de l'unité constructive (8).

4. Système de pédales selon la revendication 3, **caractérisé en ce que** le circuit imprimé (6) porte d'autres éléments constructifs électriques et électroniques pour alimenter en courant et commander les tête de capteur ainsi que pour évaluer les signaux de détection émis par ces capteurs, et que le circuit imprimé (6) forme avec les éléments constructifs et en option avec un boîtier en matière plastique l'unité constructive autonome (8) qui est équipée d'une alimentation en courant commune et d'un dispositif d'exploitation commun aux deux têtes de détecteur (3).

5. Système de pédales selon la revendication 4, **caractérisé en ce que** l'électronique d'évaluation (13) est équipée de places d'enregistrement (14) qui sont associées aux têtes de capteur individuelles (3) et destinées à la mise en mémoire de valeurs correctives pour les têtes de capteur individuelles (3), résultant des opérations d'ajustage.

6. Système de pédales selon une des revendications précédentes, **caractérisé en ce que** les unités de capteur en tant que capteurs inductifs de distance sont constituées chacune d'au moins une partie de bobine servant de tête de capteur (3) et d'au moins une partie métallique formant l'élément de capteur.

7. Système de pédales selon une des revendications précédentes, **caractérisé en ce que** le boîtier (5) présente une place de montage fixe pour l'unité constructive (8).

8. Système de pédales selon la revendication 7, **caractérisé en ce que** le boîtier (5) dans la zone des têtes de capteur (3) présente des évidements (11) pour les éléments de capteur (4).

9. Système de pédales selon la revendication 7 ou 8, **caractérisé en ce que** le boîtier (5) présente un logement à enfichage (9) pour l'unité constructive (8).

10. Système de pédales selon la revendication 9, **caractérisé en ce que** l'unité constructive (8) peut être bloquée dans le logement à enfichage (9).

11. Système de pédales selon une des revendications précédentes, **caractérisé en ce que** l'unité constructive (8) présente des raccords à enfichage pour les liaisons électriques externes.

12. Système de pédales selon la revendication 1, **caractérisé en ce que** les éléments de capteur sont situés à proximité de l'axe de pédale (2) et présentent chacun une courbure ayant la forme d'une spirale autour de l'axe de pédale (2).

13. Système de pédales selon une des revendications précédentes, **caractérisé en ce que** les éléments de capteur (4) sont disposés sur les côtés, situés en face d'eux, des leviers de pédale (1).

14. Système de pédales selon une des revendications précédentes, **caractérisé en ce que** :
- au moins une des têtes de capteur (3) présente deux des parties de bobine auxquelles sont associés deux des éléments de capteur (4) agissant en opposition,
- les têtes de capteur (3) stationnaires sont disposées proches les unes des autres,
- les deux éléments de capteur (4) inclinés dans des sens opposés sont disposés, en dessinant une sorte de papillon, entre l'axe de pédale (2) et les parties de bobine,
- toutes les têtes de capteur (3) sont intégrées à l'unité constructive (8).

15. Système de pédales selon une des revendications précédentes, **caractérisé en ce que** :
- l'unité constructive présente des raccords destinés à des conducteurs électriques externes de signaux provenant de l'environnement du système de pédales,
- les signaux externes amenés par ces conducteurs peuvent être traités dans l'unité d'évaluation de l'unité constructive,
- les signaux externes traités et des signaux internes peuvent être délivrés sur un bus de données commun.
